# EUROPEAN PATENT APPLICATION

(11) **EP 2 133 267 A1**
(43) Date of publication of application: **16.12.2009**
(21) Application number: 06851099.9
(22) Date of filing: 25.12.2006
(51) Int. Cl.: B64D 7/00, F41F 3/06

(54) **LIGHT MULTIPURPOSE AIRCRAFT**

(71) Applicant: Otkrytoe Aktsionernoe Obschestvo "Opytno-Konstruktorskoe Byuro IM. A.S. Yakovleva, Moscow 125315 (RU); Gosudarstvennoe Uchrezhdenie Federalnoe Agentstvo Po Pravovoi Zaschite Rezulatatov Intellektualnoi Deyatelnosti Voennogo, Spetsialnogo I Dvoinogo, Moscow 125040 (RU)
(72) Inventor: DEMCHENKO, Oleg Fedorovich, Moscow, 129272 (RU); DOLZHENKOV, Nikolai Nikolaevich, Moscow, 125083 (RU); POPOVICH, Konstantin Fedorovich, Moscow, 117296 (RU); SHKOLIN, Vladimir Petrovich, Moscow, 125195 (RU); GURTOVOI, Arkady Iosifovich, Moscow, 125057 (RU); KUZNETSOV, Vladimir Grigorievich, Moscow, 123181 (RU); NIKITIN, Vyacheslav Nikolaevich, Moscow, 109559 (RU); ILIN, Vyacheslav Mikhailovich, Moscow, 125299 (RU); BOZHANOV, Viktor Lavrentievich, Moscow, 125195 (RU); KODOLA, Valery Grigorievich, Moskovskaya obl., 141170 (RU)
(74) Representative: Andrae, Steffen
(86) International application number: PCT/RU2006/000696
(87) International publication number: WO 2008/079037

(57) **Abstract**

A light multi-purpose aircraft comprises a fuselage (1); a wing (2); a fin assembly (3); a landing gear (4); a main power plant (5); an auxiliary power plant (7); pylons (10); outboard suspension objects (9) arranged on the undersurface and at the ends of the wing (2); at least one outboard suspension object (9) being arranged on the undersurface of the wing (2) and at least one outboard suspension object (9) being arranged at each end of the wing (2); a gun mount (8) or a guidance and tracking mount arranged in the lower part of the fuselage (1); a controlling integrated complex of airborne electronic equipment (17) with an electric power supply system (16) and an armament control complex (19) incorporating an on-board electronic guidance and tracking system (20); a defense system (21); a multi-purpose control panel (22); a group interaction system (23); an armament control system (24) which are related to each other and to the controlling integrated complex of airborne electronic equipment (17) through a multiplexer information exchange channel; said armament control system (24) comprising a matching and logic unit (25); an emergency unloading unit (26); at least one data distribution and conversion unit (27); executive units (28); units for switching outboard suspension objects (29); a unit for switching a gun mount or guidance and tracking mount (30); components of the armament control system (24) being linked by a local channel of information exchange, the number of the executive units (28) and the units for switching outboard suspension objects (29) being consistent with the number of outboard suspension objects (9).

## Description

### FIELD OF THE INVENTION

The present invention relates to aeronautical engineering and is intended for use when manufacturing light multi-purpose aircrafts, including those for the performance of combat missions.

### BACKGROUND OF THE INVENTION

There has been known an aircraft comprising a fuselage, the main power plant with two turbojet engines arranged in the middle part of fuselage, horizontal and single-fin vertical tails, a landing gear, an auxiliary power plant to provide start-up of engines of the main power plant, power supply of airborne equipment on the ground and in flight, delivery of compressed air to the aircraft systems, said auxiliary power plant being located in the tail section of the fuselage, and a set of airborne equipment (RU 2210522 C1, B 64 C 1/36, August 20, 2003).

However, the above-mentioned aircraft fails to ensure its efficient combat application.

The closest prior art to be used for the claimed invention is a light multi-purpose aircraft at enhanced maneuvering properties comprising a fuselage, a wing, a fin assembly, a landing gear, engines of the main power plant, an auxiliary power plant located in the tail section of the fuselage across its longitudinal axis, an electric power supply system, a multi-position integrated airborne equipment complex (RU 2252899 C1 B64C 13/00, May 27, 2005).

The drawbacks to this prior art apparatus reside in insufficient capabilities relating to automation of processes for the preparation and utilization of armaments.

### SUMMARY OF THE INVENTION

It is an object of the present invention to create a light multi-purpose aircraft with improved capabilities of usage, including for the performance of combat missions.

The above object has been achieved in a light multi-purpose aircraft comprising a fuselage (1); a wing (2); a fin assembly (3); a landing gear (4); a main power plant (5); an auxiliary power plant (7); pylons (10); outboard suspension objects (9) arranged on the undersurface and at the ends of the wing (2); at least one outboard suspension object (9) being arranged on the undersurface of the wing (2) and at least one outboard suspension object (9) being arranged at each end of the wing (2); a gun mount or guidance and tracking mount (8) arranged in the lower part of the fuselage (1); a controlling integrated complex of airborne electronic equipment (17) with an electric power supply system (16) and an armament control complex (19) incorporating an on-board electronic guidance and tracking system (20); a defense system (21); a multi-purpose control panel (22); a group interaction system (23) and an armament control system (24) which are related to each other and to the controlling integrated complex of airborne electronic equipment (17) through a multiplexer information exchange channel; said armament control system (24) comprising a matching and logic unit (25); an emergency unloading unit (26); at least one data distribution and conversion unit (27); executive units (28); units for switching outboard suspension objects (29); a unit for switching a gun mount or guidance and tracking mount (30); in doing so, components of the armament control system (24) being linked by a local channel of information exchange, the number of the executive units (28) and the units for switching outboard suspension objects (29) being consistent with the number of outboard suspension objects (9).

In doing so, the pylons (10) are provided with at least one compartment for airborne equipment (11), at least one unit (12) of connecting the wing (2), at least one unit (13) of suspending outboard suspension objects (9), and also with a detachable pylon tail cone (14); a data distribution and conversion unit (27), executive units (28) as well as units for switching outboard suspension objects (29) being installed in the pylons (10), a unit for switching a gun mount (30) being installed in the fuselage (1), a gun mount (8) being arranged in the lower part of the fuselage (1) to rotate in the horizontal plane by an angle of 90° with respect to the aircraft fore-and-aft axis of symmetry.

Thanks to the proposed invention, there is increase in efficiency of using the aircraft based on automation of processes for the preparation and utilization of armaments.

### BRIEF DESCRIPTION OF THE DRAWINGS

The present invention is explained by the following drawings in which:
FIG.1 shows a side view of the layout of a light multi-purpose aircraft;
FIG. 2 shows a front view of the layout of a light multi-purpose aircraft;
FIG. 3 shows a diagram of the pylon positioning;
FIG. 4 shows a pylon layout;
FIG. 5 shows a block diagram of an armament control complex, where:

- 1-: a fuselage;
- 2-: a wing;
- 3-: a fin assembly;
- 4-: a landing gear;
- 5-: a main power plant;
- 6-: an air intake;
- 7-: an auxiliary power plant;
- 8-: a gun mount or guidance and tracking mount;
- 9-: an outboard suspension object;
- 10-: a pylon;
- 11-: a pylon compartment;
- 12-: a unit of connecting a pylon with a wing;
- 13-: a unit of suspending outboard suspension objects;
- 14-: a detachable pylon tail cone;
- 15-: a technological window;
- 16-: an electric power supply system;
- 17-: a controlling integrated complex of airborne electronic equipment;
- 18-: a computing system of the controlling integrated complex of airborne electronic equipment;
- 19-: an armament control complex;
- 20-: an on-board electronic guidance and tracking system;
- 21-: a defense system;
- 22-: a multi-purpose control panel;
- 23-: a group interaction system;
- 24-: an armament control system;
- 25-: a matching and logic unit;
- 26-: an emergency unloading unit;
- 27-: a data distribution and conversion unit;
- 28-: an executive unit;
- 29-: a unit for switching outboard suspension objects;
- 30-: a unit for switching a gun mount or guidance and tracking mount;
- 31-: a switching panel.

### BEST MODE TO CARRY OUT THE INVENTION

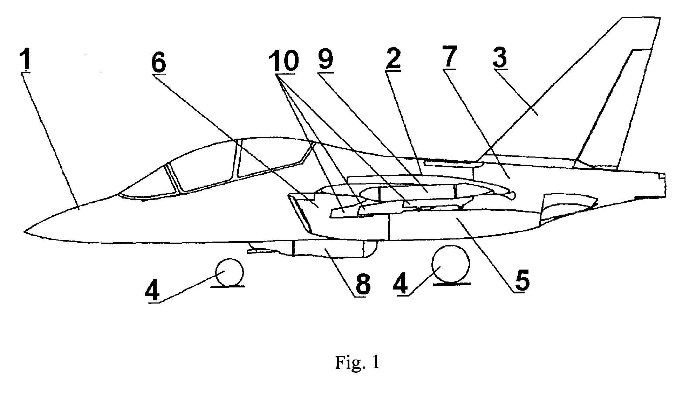

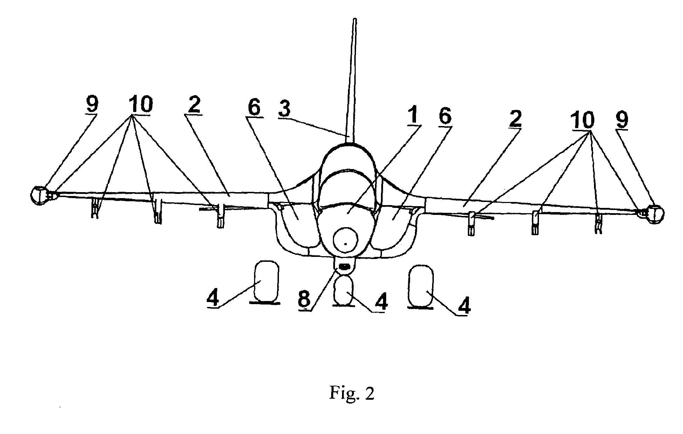

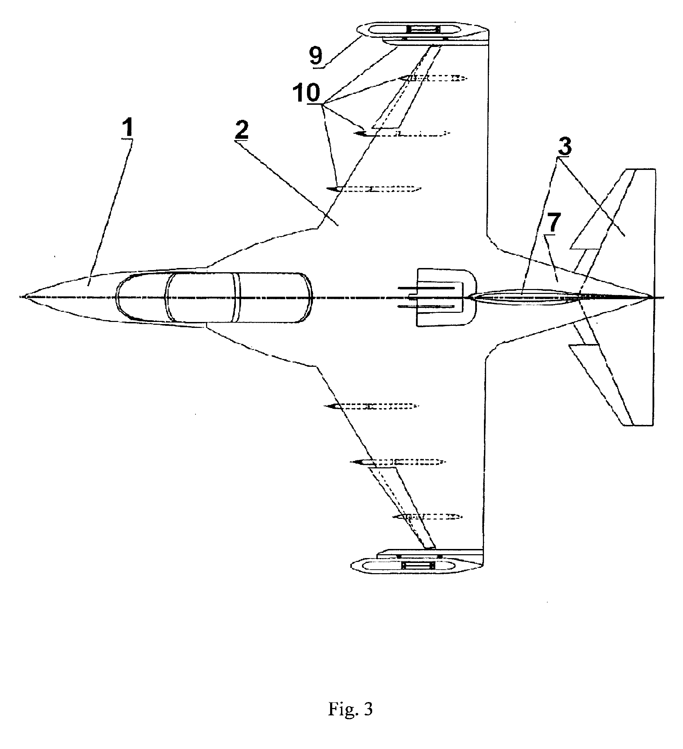

With reference to Figs. 1, 2, 3, a light multi-purpose aircraft comprises a fuselage (1) on which a wing (2) is installed symmetrically; a fin assembly (3); a landing gear (4); a main power plant (5) with an air intakes (6); an auxiliary power plant (7).

In the lower part of the fuselage (1), there is installed a gun mount (8) to rotate by an angle of up to 90° in the horizontal plane with respect to the aircraft fore-and-aft axis of symmetry. At the site of the gun mount (8), there may be arranged a guidance and tracking mount.

Outboard suspension objects (9), among which there are, for example, destruction means, suspension fuel tanks, containers of jamming release systems and other objects, are mounted on pylons (10) both on the undersurface and at the ends of the wing (2).

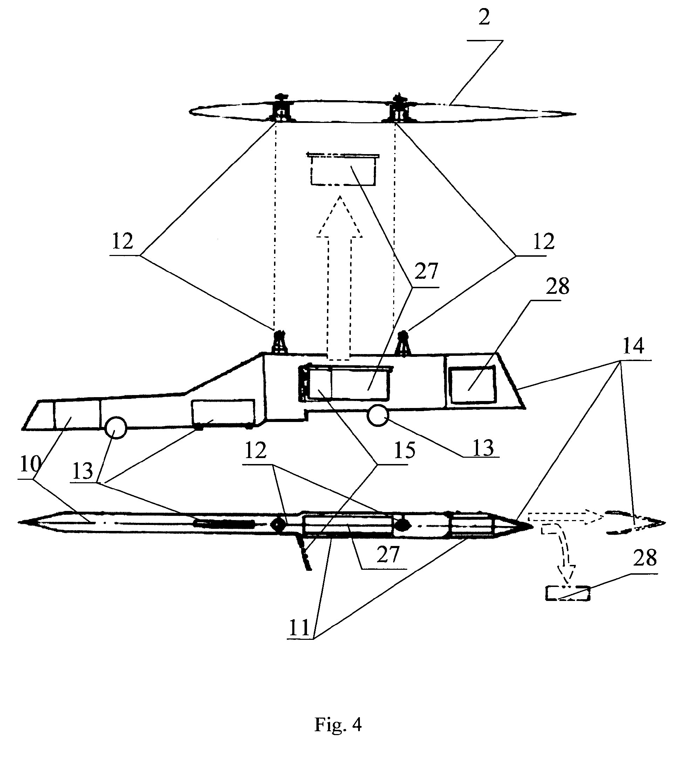

In the pylons (see, Fig. 4), there are provided compartments (11) for airborne equipment, pylon - wing connection units (12), suspension units (13) for suspending outboard suspension objects (9), and also a detachable pylon tail cone (14) with its inner cavity that may also accommodate airborne equipment.

The suspension units (13) may be made both lock-free and in the form of lock holders, depending on requirements associated with a type of an outboard suspension object (9). Compartments (11) of the pylons (10) are provided with technological windows (15) to be closed by means, for example, hatch doors (see, Fig. 4).

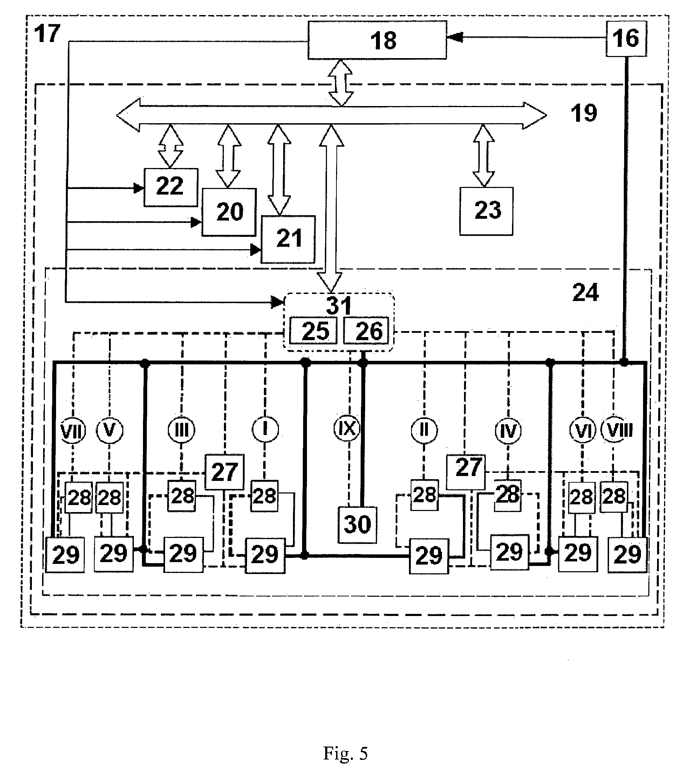

With reference to Fig. 5, a light multi-purpose aircraft also comprises a controlling integrated complex of airborne electronic equipment (17) with an electric power supply system (16) and a computing system of a controlling integrated complex of airborne electronic equipment (18); in doing so, components of the controlling integrated complex of airborne electronic equipment (17) one of which being an armament control complex (19) are linked by a multiplexer channel of information exchange with the computing system of a controlling integrated complex of airborne electronic equipment (18).

The armament control complex (19) incorporates an on-board electronic guidance and tracking system (20); a defense system (21); a multi-purpose control panel (22); a group interaction system (23); an armament control system (24). Components of the armament control complex (19) are related to each other and to the computing system of a controlling integrated complex of airborne electronic equipment (18) through an intersystem multiplexer information exchange channel.

In turn, the armament control system (24) incorporates a matching and logic unit (25); an emergency unloading unit (26); data distribution and conversion units (27); executive units (28) for starting up or disconnecting an outboard suspension object (9); units for switching outboard suspension objects (29); and also a unit for switching a gun mount or a guidance and tracking mount (30).

The matching and logic unit (25) and the emergency unloading unit (26) may be mounted, for example, on a switching panel (31) arranged in the lower part of the fuselage (1).

The data distribution and conversion units (27) and the executive units (28) are arranged in the pylons (10), for example, in the compartments (11). The units for switching outboard suspension objects (29) are also arranged in the pylons (10). The unit for switching a gun mount or the unit for switching a guidance and tracking mount (30) may be arranged in the fuselage (1) of the aircraft.

Components of the armament control system (24) are linked by a local channel of information exchange, and the number of the executive units (28) and the units for switching outboard suspension objects (29) is consistent with the number of outboard suspension objects (9).

The number of the pylons (10) to be arranged in the lower part of the wing (2) may change depending on the number of outboard suspension objects (9) in the range from 2 to 10. As an example, Figs. 1-2 show the aircraft having six pylons (1).

To use various armament versions in the light multi-purpose aircraft, there is simultaneously realized equipment channels of digital communication between the armament control complex (19) and outboard suspension objects (9) through the armament control system (24).

The armament control complex (19) is designed for the preparation and application of outboard suspension objects (9); in doing so, the armament control complex (19) performs the following functions:
selection, jointly with the controlling integrated complex of airborne electronic equipment (17), of an outboard suspension object (9) for usage;
preparation and start (release) of the selected outboard suspension object (9) in accordance with a required time cyclogram;
transmission to the controlling integrated complex of airborne electronic equipment (17) of data concerning a type, availability and readiness to the application of an outboard suspension object (9);
formation of necessary blockings to ensure safety in service and use of an outboard suspension object (9);
application of electric power supply from on-board sources to outboard suspension objects (9);
conversion and transmittance of control signals from the computing system of the controlling integrated complex of airborne electronic equipment (18) to outboard suspension objects (9).

In the armament control system (24), the matching and logic unit (25) provides solution of algorithms for controlling outboard suspension objects (9), information interaction with the controlling integrated complex of airborne electronic equipment (17) [according to All-Union Standard 26765.52-87], conversion of target indication signals from All-Union Standard 26765.52-87 to All-Union Standard 18977-79.

The emergency unloading unit (26) provides jettisoning of outboard suspension objects (9) and application of the emergency electric power supply.

The data distribution and conversion unit (27) provides translation and/or conversion of target indication signals (according to All-Union Standard 18977-79) from the matching and logic unit (25) to outboard suspension objects (9).

The executive units (28) provide information interaction through the units for switching outboard suspension objects (29) with outboard suspension objects (9), including via target indication channels for controllable outboard suspension objects (9) [according to All-Union Standard 18977-79].

Information interaction between the matching and logic units (25) and the computing system of the controlling integrated complex of airborne electronic equipment (18) is carried out according to All-Union Standard 26765.52-87.

Communication between the executive units (28) and the matching and logic unit (25) through the energy channel is carried out according to All-Union Standard 18977-79 and that between the executive units (28) and the data distribution and conversion unit (27) is carried out by discrete once-only signals.

Application at the ends of the wing (2) of cartridges of jamming release systems as an outboard suspension object (9) enables additional advantages when performing combat operations of the aircraft.

Control signals from the armament control system (24) enter all units through a single communication line, with branching in accordance with logic numbers of units, thus enabling putting into operation of particular executive units (28) and units for switching outboard suspension objects (29) of a corresponding outboard suspension object (9).

Arrangement of equipment, for example data distribution and conversion unit (27), executive units (28) and units for switching outboard suspension objects (29), in the pylons (10) affords substantial simplification of the process for controlling outboard suspension objects (9), decrease in the aircraft weight and reduction of the time of preparation for the mission when changing a type of outboard suspension object (9), since to control the other object, it is sufficient to replace an executive unit (28) and a unit for switching outboard suspension objects (29). The executive unit (28) is made in the form of a separable module, and its replacement is simplified to the utmost.

The use of the proposed invention makes it possible to improve efficiency of applying the aircraft based on automation of processes for the preparation and utilization of armaments.

### Industrial applicability

The present invention may be used in aeronautical engineering when manufacturing light multi-purpose aircrafts designed, inter alia, for the performance of combat missions.

## Claims

1. A light multi-purpose aircraft comprising a fuselage (1); a wing (2); a fin assembly (3); a landing gear (4); a main power plant (5); an auxiliary power plant (7); pylons (10); outboard suspension objects (9) arranged on the undersurface and at the ends of the wing (2); at least one outboard suspension object (9) being arranged on the undersurface of the wing (2) and at least one outboard suspension object (9) being arranged at each end of the wing (2); a gun mount (8) or a guidance and tracking mount arranged in the lower part of the fuselage (1); a controlling integrated complex of airborne electronic equipment (17) with an electric power supply system (16) and an armament control complex (19) incorporating an on-board electronic guidance and tracking system (20); a defense system (21); a multi-purpose control panel (22); a group interaction system (23); an armament control system (24) which are related to each other and to the controlling integrated complex of airborne electronic equipment (17) through a multiplexer information exchange channel; said armament control system (24) comprising a matching and logic unit (25); an emergency unloading unit (26); at least one data distribution and conversion unit (27); executive units (28); units for switching outboard suspension objects (29); a unit for switching a gun mount or guidance and tracking mount (30); components of the armament control system (24) being linked by a local channel of information exchange, the number of the executive units (28) and the units for switching outboard suspension objects (29) being consistent with the number of outboard suspension objects (9).

2. A light multi-purpose aircraft as claimed in Claim 1, in which the pylons (10) are provided with at least one compartment (11), at least one wing-connecting unit (12), at least one unit of suspending outboard suspension objects (13), and also with a detachable pylon tail cone (14).

3. A light multi-purpose aircraft as claimed in Claim 1, in which data distribution and conversion units (27), executive units (28) as well as units for switching outboard suspension objects (29) are installed in the pylons (10), a gun mount switching unit (30) is installed in the fuselage (1).

4. A light multi-purpose aircraft as claimed in Claim 1, in which the gun mount (8) is arranged in the lower part of the fuselage (1) to rotate in the horizontal plane by an angle of up to 90° with respect to the aircraft fore-and-aft axis of symmetry.
